# EUROPEAN PATENT APPLICATION

(11) **EP 2 645 465 A1**
(43) Date of publication of application: **02.10.2013**
(21) Application number: 13156080.7
(22) Date of filing: 21.02.2013
(51) Int. Cl.: H01M 10/42, H01M 10/48, H02J 7/00, H01M 2/10

(54) **Battery system**

(30) Priority: 28.03.2012 JP 2012072715
(71) Applicant: Hitachi Ltd., Tokyo 100-8280 (JP)
(72) Inventor: Takahashi, Toshiki, Tokyo, 100-8220 (JP); Takeda, Kenji, Tokyo, 100-8220 (JP); Yamauchi, Shin, Tokyo, 100-8220 (JP)
(74) Representative: MERH-IP Matias Erny Reichl Hoffmann

(57) **Abstract**

Provided is a battery system 201 which can easily identify a portion where a fuse 32 is blown when the fuse 32 is blown even in a large-scale battery system 201 where a plurality of batteries are connected in series. The battery system 201 includes a battery pack 40 including a series circuit where a plurality of battery modules 30 are connected to each other in series, the battery module 30 including a fuse 32 which is connected in series to a battery cell 20, and a light emitting diode 34 which is connected in parallel to the fuse 32 and has an anode thereof connected to a positive pole side of the battery cell 20; and a switching element 42 which is connected in parallel to the series circuit.

## Description

### BACKGROUND OF THE INVENTION

### 1. Field of the Invention

The present invention relates to a battery system in which a device for detecting a blown fuse is mounted.

### 2. Description of the Related Art

Battery systems which have been steadily progressing recently can be used in versatile applications. A scale of a battery system differs depending on a purpose of usage. Particularly, a battery system used for suppressing the fluctuation of a load or for coping with a blackout in a server center or the like, or a battery system used for stabilizing a large-scale system in a regenerative power absorbing system for railroads, a regenerative energy system, a nuclear power plant or the like becomes a large-scale system. Such a large-scale battery system is constructed on the premise that the system is used for a long period and hence, the system is required to satisfy the demand for further enhancement of safety and maintenance property of the battery system.

In such a large-scale battery system, to enhance the safety of the battery system, a countermeasure such as mounting of a fuse on respective battery modules is adopted. On the other hand, there is a need for easily identifying the battery module where a fuse has blown when any one of the battery modules blows a fuse.

JP-A-2008-296863 (patent literature 1) discloses an invention where a light emitting diode is connected in parallel to a fuse which is connected in series to a battery, and the light emitting diode is made to emit light when the fuse is blown thus outputting a warning.

However, in the invention described in patent literature 1, in a case where a plurality of power storage modules having fuses connected in series to a power source (battery) are connected in series, when a fuse is blown, "battery voltage x the number of series connection - inverter voltage" is applied to both ends of the fuse and an existing voltage is not applied to the light emitting diode and hence, there is a possibility that the invention described in patent literature 1 cannot sufficiently cope with the large-scale battery system.

### SUMMARY OF THE INVENTION

Accordingly, it is an object of the present invention to provide a battery system which can easily identify a portion where a fuse is blown when the fuse is blown even in a large-scale battery system where a plurality of batteries are connected in series.

According to one aspect of the present invention, there is provided a battery system having a battery pack which includes : a series circuit where a plurality of battery modules are connected to each other in series, the battery module including a fuse which is connected in series to a battery cell, and a light emitting diode which is connected in parallel to the fuse and has an anode thereof connected to a positive pole side of the battery cell; and a switch element which is connected in parallel to the series circuit.

By carrying out the present invention, it is possible to provide a battery system which can easily identify a portion where a fuse is blown when the fuse is blown even in a large-scale battery system where a plurality of batteries are connected in series.

### BRIEF DESCRIPTION OF THE DRAWINGS

Fig. 1 is a view showing a power generation system to which a battery system according to the present invention is applied;
Fig. 2 is a block diagram showing the battery system according to the present invention;
Fig. 3 is a circuit diagram of a battery module according to the present invention;
Fig. 4 is a circuit diagram of a battery pack according to the present invention;
Fig. 5 is a circuit diagram of the battery system according to the present invention;
Fig. 6 is a circuit diagram of a battery pack according to a second embodiment of the present invention;
Fig. 7 is a circuit diagram of a battery system according to a third embodiment of the present invention;
Fig. 8 is a circuit diagram of a battery pack according to a fourth embodiment of the present invention; and
Fig. 9 is a perspective view showing an external appearance of the battery pack according to the present invention.

### DESCRIPTION OF THE PREFERRED EMBODIMENTS

### (First embodiment)

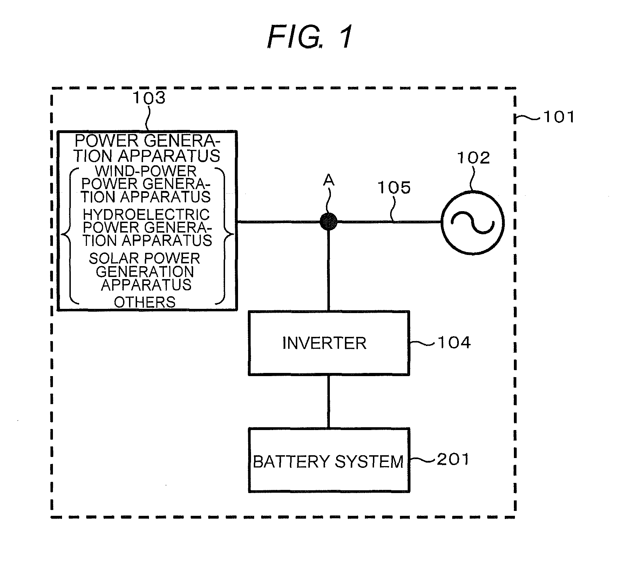

Hereinafter, a battery system according to the first embodiment of the present invention is explained in conjunction with drawings. Firstly, a power generation system to which the battery system according to the present invention is applicable is explained in conjunction with Fig. 1. A power generation system 101 includes: a power generation apparatus 103; a power system 102; an electric line 105 which connects the power system 102 and the power generation apparatus 103 to each other; and a battery system 201 which is connected to the electric line 105 via an inverter 104. The power generation apparatus 103 is, for example, a wind-power power generation apparatus, a hydroelectric power generation apparatus, a solar power generation apparatus or other power generation apparatuses.

The battery system 201 is provided for stabilizing the supply of electric power by storing surplus electric power therein when electric power is generated by the power generation apparatus 103 exceeding electric power required by the power system 102 and by discharging electric power when electric power generated by the power generation apparatus 103 is smaller than electric power required by the power system 102. When the battery system 201 performs the charging or the discharging of electric power, the supply or the reception of electric power is performed by the inverter 104 through the AC-DC conversion or the DC-AC conversion.

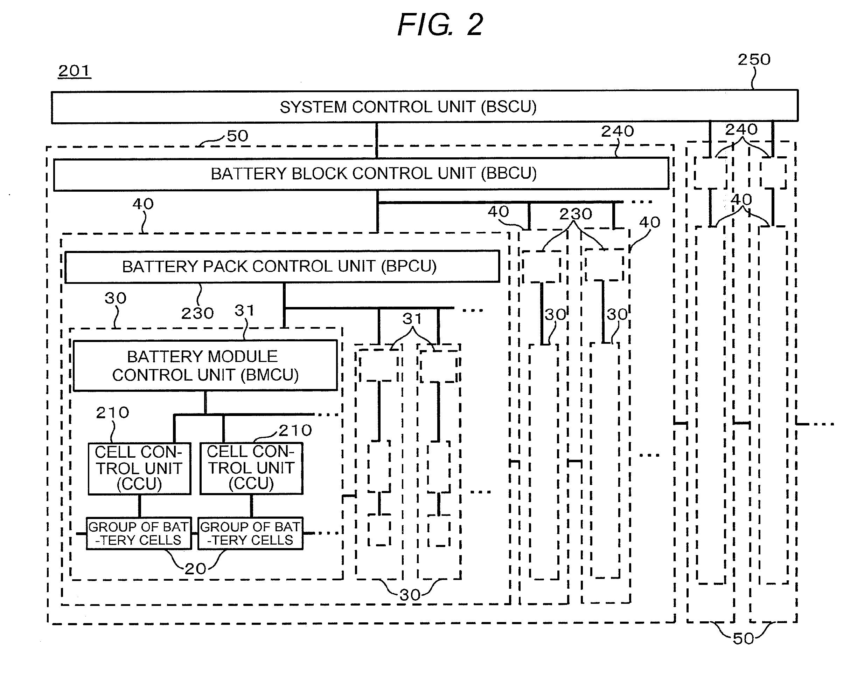

Next, Fig. 2 shows a block diagram of the battery system 201. The battery system 201 according to the present invention includes a battery block 50 which has a plurality of battery packs 40. Each battery pack 40 includes a plurality of battery modules 30. The battery module 30 is set as a minimum unit.

The constitution of the battery module 30 is specifically explained. The battery module 30 includes: a plurality of groups of battery cells 20; cell control units (CCU) 210 which collect battery information on the group of battery cells 20 (for example, current information, voltage information, temperature information, charge state and the like of battery cells) ; and a battery module control unit (BMCU) 31. The cell control units 210 also perform a balancing control between battery cells described later. The battery information collected by the cell control units 210 is transmitted to the battery module control unit (BMCU) 31. The battery module control unit (BMCU) 31 calculates an average charge state of the group of battery cells 20 in the battery module 30, further adds the battery information on the average charge state of the group of battery cells 20 to the previous battery information, and transmits the battery information to a battery pack control unit (BPCU) 230 which constitutes a host control unit with respect to the battery module control unit (BMCU) 31.

The battery pack 40 includes the plurality of battery modules 30 and the battery pack control unit 230. The battery pack control unit 230 collects the battery information outputted from the respective battery module control units 31, and calculates information on an average charge state of the battery modules 30 obtained by averaging charge states of the battery modules 30 in the battery pack 40. Then, the battery pack control unit 230 adds the information on the average charge state of the plurality of battery modules 30 to the battery information obtained by the battery module control units 31, and outputs the battery information to a battery block control unit 240 which constitutes a host control unit with respect to the battery pack control unit 230.

The battery block 50 includes the plurality of battery packs 40 and the battery block control unit 240. The battery block control unit 240 collects the battery information outputted from the respective battery pack control units 230, and calculates information on an average charge state of the battery packs 40 obtained by averaging charge states of the battery packs 40 in the battery block 50. Then, the battery block control unit 240 adds the information on the average charge state of the plurality of battery packs 40 to the battery information obtained by the battery pack control units 230, and outputs the battery information to a system control unit 250 which constitutes a host control unit with respect to the battery block control unit 240. Although the explanation of this embodiment has been made on the presumption that the battery block 50 includes the plurality of battery packs 40, the number of battery packs 40 which constitute the battery block 50 may be one. In this case, the battery block control unit 240 directly outputs the battery information outputted from the battery pack control unit 230 to the system control unit 250.

In the present invention, the states of the batteries are monitored in plural layers and hence, the present invention provides the battery system 201 of high safety. Further, the battery modules 30, the battery packs 40 and the battery blocks 50 according to the present invention can be exchangeable in accordance with each unit thus providing the battery system of high maintenance property.

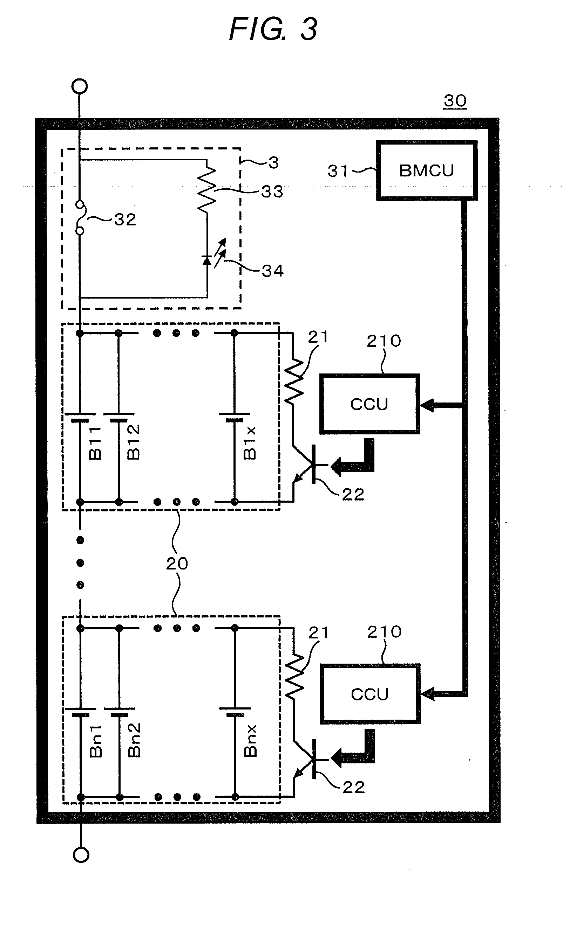

Next, the specific circuit constitution of the battery module 30 is explained in conjunction with Fig. 3. The battery module 30 includes a power source circuit where the plurality of groups of battery cells 20 are connected in series to each other, and a fuse blowing detection circuit 3 which is connected in series to the power source circuit. The group of battery cells 20 is configured by connecting a plurality of battery cells (B11 to B1X) to each other in parallel. A resistance element 21 and a switching element 22 are connected in parallel to the group of battery cells 20. The resistance element 21 and the switching element 22 are provided for performing balancing among the battery cells (B11 to B1X) when irregularities in voltage occur among the battery cells (B11 to B1X). The cell control unit 210 obtains current/voltage information among the respective battery cells (B11 to B1X) and outputs the current/voltage information to the battery module control unit 31, and the battery module control unit 31 calculates charge states (SOC) of the respective battery cells. Further, the cell control unit 210 outputs a signal based on which the switching element 22 is brought into an ON state when the difference in the charge state among the respective battery cells (B11 to B1X) becomes 10% or more, and performs balancing among the battery cells (B11 to B1X) within the group of battery cells 20.

The fuse blowing detection circuit 3 is constituted of a fuse 32, and a resistance element 33 and a light emitting diode 34 which are connected in parallel to the fuse 32. A cathode side of the light emitting diode 34 is connected to a low potential side of the resistance element 33. Due to such a constitution, in a case where the fuse 32 mounted in any one of the battery modules 30 is blown, the light emitting diode 34 emits light by using a detection method described later.

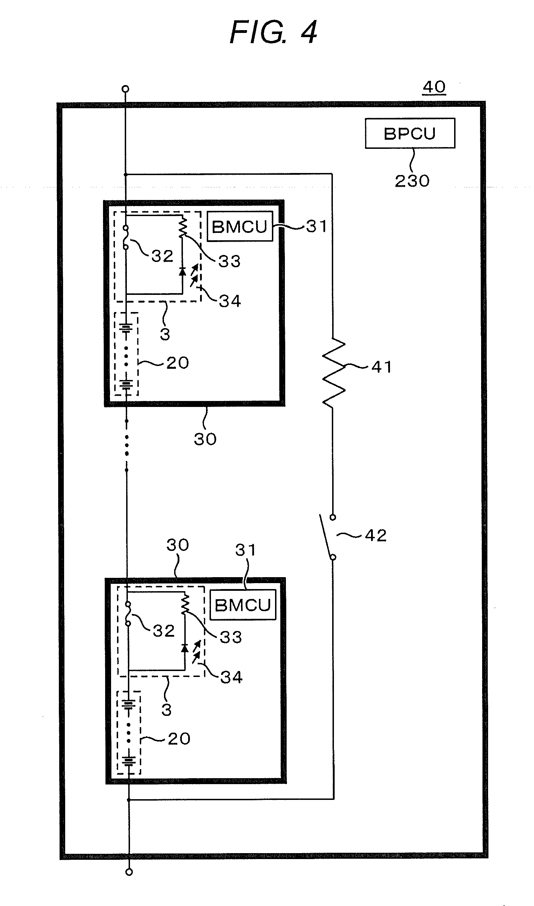

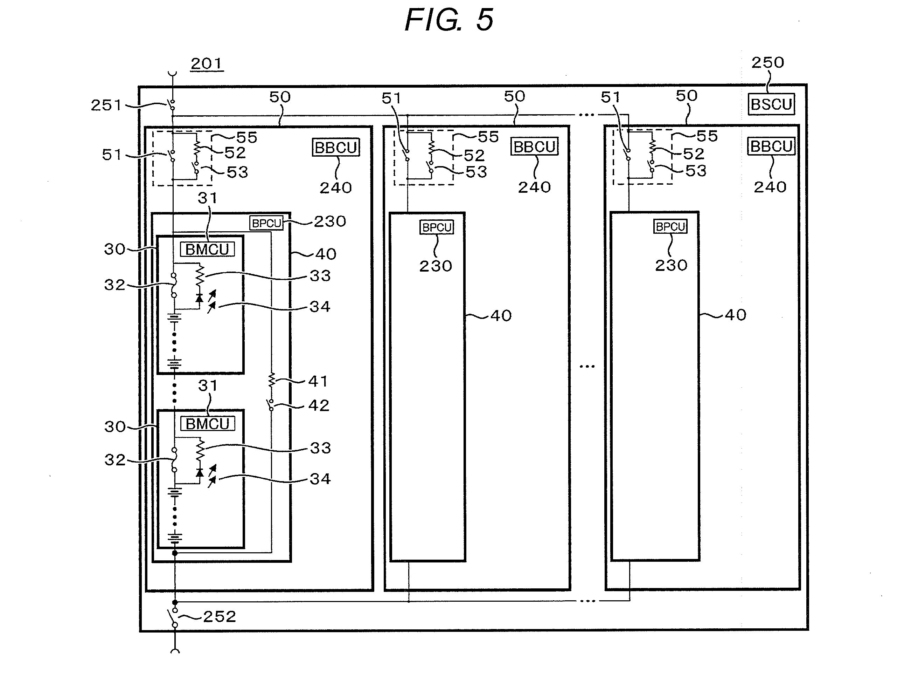

Next, Fig. 4 and Fig. 5 show the specific circuit constitution of the battery pack 40. The battery pack 40 shown in Fig. 4 is constituted of a series circuit where the plurality of battery modules 30 are connected in series, and a resistance element 41 and a switching element 42 which are connected in parallel to the series circuit.

Fig. 5 shows the battery system 201 where the plurality of battery blocks 50 each having the battery pack 40 are connected to each other in parallel. Firstly, the constitution of the battery block 50 is explained. The battery block 50 includes the battery pack 40 and a precharge circuit 55 which is connected in series to the battery pack 40. Although only one battery pack 40 is exemplified in this embodiment, the plurality of battery packs 40 may be connected to each other in parallel in the battery block 50. On the other hand, the battery blocks 50 are connected to each other in parallel, and the battery blocks 50 are connected to a positive pole side of the inverter 104 via a switching element 251 and are connected to a negative pole side of the inverter 104 via a switching element 252.

The precharge circuit 55 is constituted of a switching element 51, and a resistance element 52 and a switching element 53 which are connected in parallel to the switching element 51. The precharge circuit 55 can reduce irregularities in charge state or voltage between the battery block 50 and other battery blocks 50 by making use of a cross current when there exist the irregularities in the charging state or the voltage between the battery blocks 50. That is, the precharge circuit 55 brings the switching element 251 and the switching element 252 into an OFF state, brings the switching element 51 into an OFF state, and maintains a period where the switching element 53 is held in an ON state for some time.

Here, explained is a method where when the fuse 32 in any one of the battery modules 30 is blown, the battery module 30 where the fuse 32 is blown is determined or identified.

Firstly, when the fuse 32 in any one of the battery modules 30 is blown, the battery block control unit 240 where an abnormal voltage is generated is separated. To be more specific, the switching element 51 and the switching element 53 in the battery block 50 where the abnormal voltage is generated are brought into an OFF state. By performing such an operation, even when a voltage of the inverter 104 under charging or discharging which is connected to the outside cannot be identified or a voltage which is maintained by a load (constituted of a resistance component and a capacitance component of the load per se) in a non-operation state is not known, it is possible to eliminate the influence exerted from the outside by cutting off the switching elements 51, 53. Accordingly, by firstly cutting off the switching elements 51, 53, a drive current for the light emitting diode 34 can be identified by a known series battery voltage and a sum of resistance values of the resistance element 33 and the resistance element 41 and hence, whatever external load is connected to the battery system 201, it is possible to surely make the light emitting diode 34 emit light.

Thereafter, the switching element 42 arranged in the battery pack 40 is brought into an ON state. As a result, a closed circuit which is constituted of series elements of the battery modules 30, and the resistance element 41 and the switching element 42 is formed in the battery pack 40 so that an electric current flows into the light emitting diode 34 which is connected in parallel to the blown fuse 32 whereby the light emitting diode 34 emits light. Accordingly, by arranging the light emitting diode 34 such that the light emitting diode 34 can be visually recognized from the outside of a casing of the battery modules 30, even in the battery system which uses a large number of battery modules, the battery module 30 in which abnormality occurs can be easily confirmed and can be exchanged.

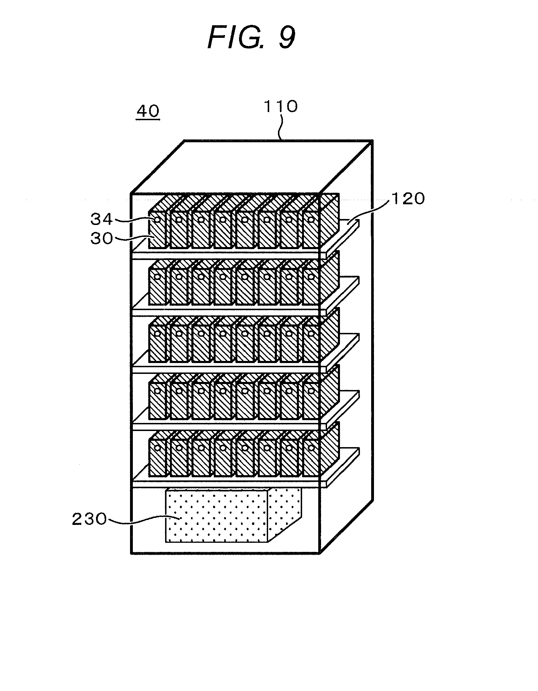

Fig. 9 shows the external appearance of the battery pack 40 constructed in accordance with the present invention. The plurality of battery modules 30 are accommodated in a battery rack 110 in a state where the battery modules 30 are placed in parallel to each other on each module mounting base 120. The battery pack control unit 230 is also accommodated in the battery rack 110. The light emitting diode 34 is mounted in the battery module 30 such that the light emitting diode 34 can be visually recognized from the outside of the casing of the battery modules 30. Due to such a constitution, even when the fuse 32 is blown in the inside of any one of the battery modules 30, the blowing of the fuse 32 can be easily visually recognized from the outside of the battery pack 40 and hence, the battery module 30 can be easily exchanged thus enhancing the maintenance property of the battery system 201. Battery packs of other embodiments explained hereinafter may also adopt the substantially same constitution with respect to the external appearance of the battery pack 40.

As has been explained heretofore, with the use of the battery system of this embodiment, the battery module 30 where the fuse is blown can be easily identified.

### (Second embodiment)

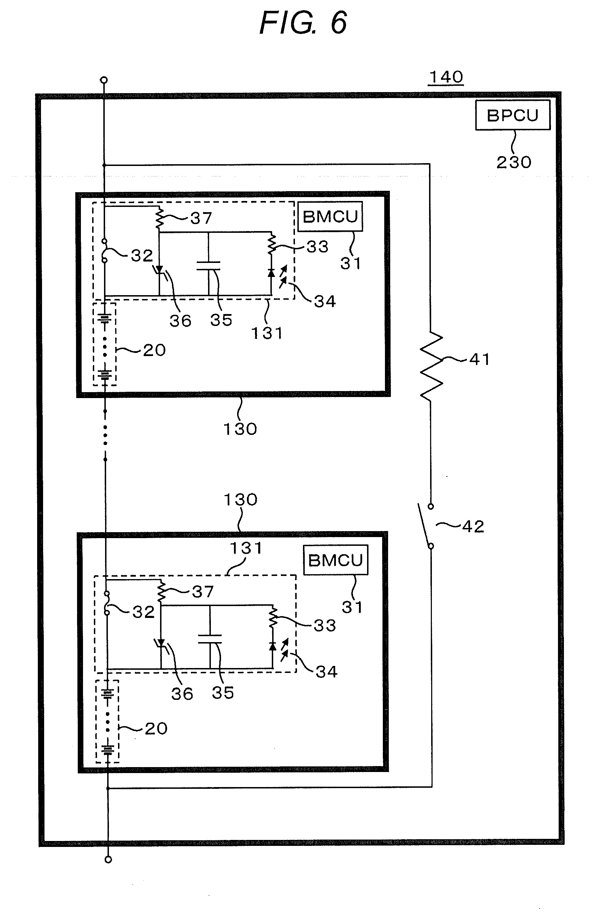

Fig. 6 shows the second embodiment according to the present invention. The constitution of this embodiment substantially equal to the constitution of the first embodiment is explained using the same drawing numerals used in the first embodiment. The specific technical feature which makes this embodiment differ from the first embodiment lies in the constitution of a fuse blowing detection circuit.

A battery module 130 according to the second embodiment is constituted by connecting a fuse blowing detection circuit 131 and a group of battery cells 20 in series. The fuse blowing detection circuit 131 includes a resistance element 37 which is connected in parallel to a fuse 32 and a Zener diode 36. A cathode side of the Zener diode 36 is connected to a positive pole side of the group of battery cells 20 and an anode side of the Zener diode 36 is connected to the resistance element 37.

The fuse blowing detection circuit 131 includes a capacitor 35 and a light emitting diode 34 which are connected in parallel to the Zener diode 36. A cathode side of the light emitting diode 34 is connected to the anode side of the Zener diode 36 via a resistance element 33, and an anode side of the light emitting diode 34 is connected to a positive pole side of the batteries.

When the fuse 32 is blown, "battery voltage x the number of series connection - inverter voltage" is applied to both ends of the fuse 32 so that a sudden voltage is applied to the light emitting diode 34 whereby the possibility that the light emitting diode 34 is broken cannot be denied 100%. Accordingly, by adopting such a circuit constitution, when the fuse 32 is blown, firstly, a charge is stored in the capacitor 35 so that it is possible to prevent a large voltage from being suddenly applied to the light emitting diode 34. Further, by arranging the Zener diode 36 in parallel to the capacitor 35, when a voltage of a predetermined value is applied to the capacitor 35, the Zener diode 36 generates a Zener breakdown thus preventing a voltage of the predetermined value or more from being applied to the capacitor 35 whereby it is possible to protect the light emitting diode 34. The capacitance of the capacitor may preferably be set such that a voltage which ensures the normal light emission of the light emitting diode 34 is applied to the light emitting diode 34. For example, it is preferable to use the capacitor of 0.1 µF. Further, it is sufficient to set a breakdown voltage of the Zener diode slightly larger than a forward voltage of the light emitting diode 34 to be used and hence, by setting the breakdown voltage of the Zener diode to 5 V, it is possible to prevent the breakdown of the light emitting diode 34 and make the light emitting diode 34 surely emit light.

As has been explained heretofore, the breakdown of the light emitting diode 34 can be prevented when the fuse 32 is blown and hence, it is possible to surely identify the battery module 130 where the fuse 32 is blown.

The specific constitution of a battery system 201 may be obtained by modifying the battery pack 40 shown in Fig. 5 to a battery pack 140 according to this embodiment. Accordingly, with respect to a method of identifying the battery module 130 where the fuse 32 is blown, the battery module 130 where the fuse 32 is blown can be identified by a method substantially equal to the method used in the first embodiment.

### (Third embodiment)

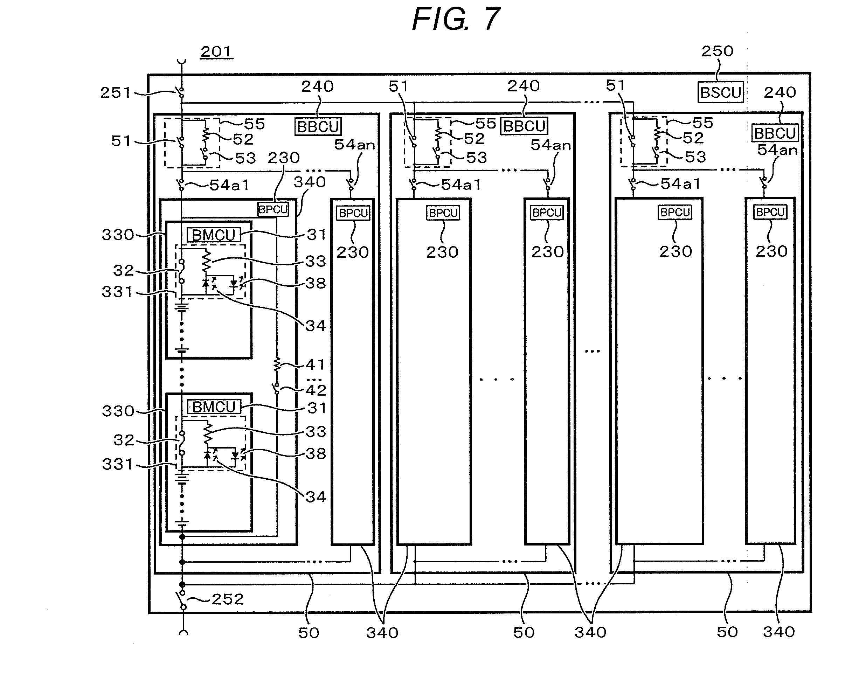

Fig. 7 shows the third embodiment according to the present invention. The constitution of this embodiment substantially equal to the constitution of the first embodiment is explained using the same drawing numerals used in the first embodiment. The specific technical features which make this embodiment differ from the first embodiment lie in the constitution of a fuse blowing detection circuit and the constitution where a plurality of battery packs which constitute a battery block 50 are arranged in parallel to each other.

Firstly, a fuse blowing detection circuit 331 arranged in the inside of a battery module 330 is explained. The fuse blowing detection circuit 331 is constituted of a fuse 32, and a resistance element 33 and a light emitting diode 34 which are connected in parallel to the fuse 32. An anode side of the light emitting diode 34 is connected to a positive pole side of a group of battery cells 20, and the resistance element 33 is connected to a cathode side of the light emitting diode 34. The fuse blowing detection circuit 331 includes a light emitting diode 38 which is connected in parallel to the light emitting diode 34. Due to such a constitution, the light emitting diode 34 or the light emitting diode 38 can be turned on in both cases, that is, the case where the battery module 330 is in a discharge state and the case where the battery module 330 is in a charge state. Accordingly, the battery module 330 where the fuse 32 is blown can be identified irrelevant to a charge state of each battery module 330.

Next, a battery pack 340 and the battery block 50 are explained. The battery pack 340 is constituted by connecting the above-mentioned plurality of battery modules 330 in series. The battery block 50 is constituted by connecting the plurality of battery packs 340 to each other in parallel. Further, the battery packs 340 are, as shown in Fig. 7, connected to a precharge circuit 55 via switching elements 54a1, ... 54an (n being the number of battery packs 340 arranged in parallel to each other). Due to such a constitution, a cross current between the battery packs 340 can be utilized with the use of a method of identifying a portion where the fuse 32 is blown which is described hereinafter and hence, there is no possibility that a large voltage is applied to the light emitting diode 34 when the fuse 32 is blown whereby the breakdown of the light emitting diode 34 can be prevented.

Next, explained is a method for identifying the blown fuse 32 when the fuse 32 is blown in any one of the battery modules 330. Firstly, when the fuse 32 in one battery module 330 is blown in the battery pack 340, switching elements 51, 53 in the inside of the battery block 50 having the battery pack 340 where the fuse 32 is blown are brought into an OFF state in response to a command from a battery block control unit 240. Thereafter, the switching elements 54a1, ... 54an are held in an ON state until the deviation between voltages of the respective battery packs 340 inputted to the battery block control unit 240 falls within a predetermined range. When the deviation between the voltages of the respective battery packs 340 becomes a value within the predetermined range, the battery block control unit 240 performs a control of bringing the switching elements 54a1, ... 54an into an OFF state. Then, a battery pack control unit 230 brings a switching element 42 into an ON state so that the battery module 330 where the fuse 32 is blown can be surely identified while preventing the breakdown of the light emitting diodes 34, 38 which may be caused when an overvoltage is applied to the light emitting diodes 34, 38.

### (Fourth embodiment)

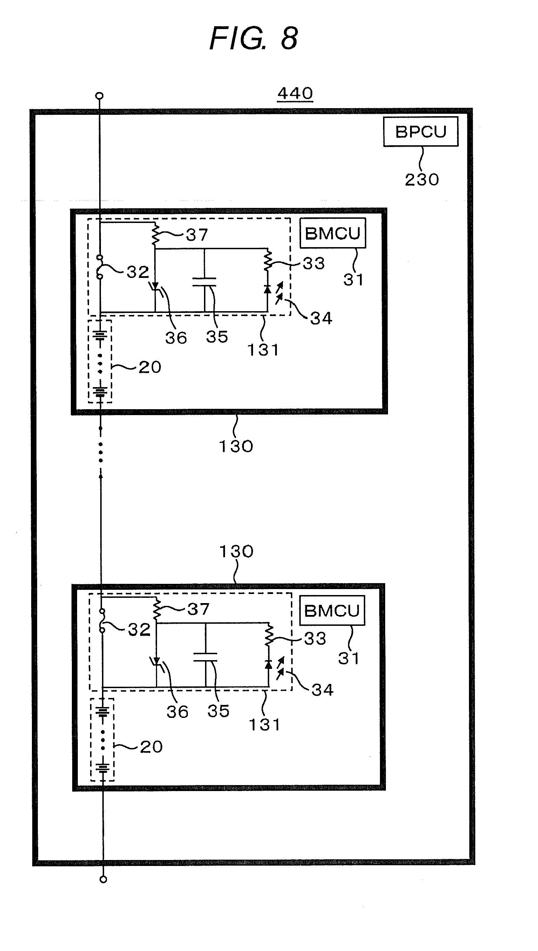

Fig. 8 shows the fourth embodiment according to the present invention. The constitution of this embodiment substantially equal to the constitution of the second embodiment is explained using the same drawing numerals used in the second embodiment. The specific technical feature which makes this embodiment differ from the second embodiment lies in the constitution of a battery pack.

That is, the technical feature which makes this embodiment differ from the second embodiment is that a battery pack 440 according to this embodiment does not have a resistance element 41 and a switching element 42 which are connected in parallel to series elements of battery modules 130.

As described above, when a fuse 32 is blown, "battery voltage x the number of series connection - inverter voltage" is applied to both ends of the fuse 32. Accordingly, when a voltage of a load connected to a battery system 201 can be controlled, a voltage applied to both ends of a blown fuse 32 can be controlled while simplifying the circuit constitution as in the case of this embodiment (for example, performing a control of elevating an inverter voltage for preventing an excessively large voltage from being applied to the both ends of the fuse 32) and hence, this embodiment is effective when an potential of an external load is changed. Accordingly, with the use of the battery pack 440 according to this embodiment, it is possible to provide the battery system 201 which can surely identify the battery module 130 where the fuse 32 is blown without increasing the number of parts.

As has been explained heretofore, with the use of the present invention, it is possible to provide a battery system which can easily and surely identify a battery module where a fuse is blown.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A battery system having a battery pack, the battery pack (40) comprising:
a series circuit where a plurality of battery modules (30) are connected to each other in series, the battery module (30) including a fuse (32) which is connected in series to a battery cell (20), and a light emitting diode (34) which is connected in parallel to the fuse (32) and has an anode thereof connected to a positive pole side of the battery cell (20); and
a switching element (42) which is connected in parallel to the series circuit.

2. The battery system according to claim 1, wherein the battery system comprises a switching element on a positive pole side of the battery pack (40).

3. The battery system according to claim 1 or 2, wherein a capacitor (35) is connected in parallel to the light emitting diode (34).

4. The battery system according to claim 3, wherein a Zener diode (36) is connected in parallel to the capacitor (35), and a cathode of the Zener diode (36) is connected to a positive pole side of the battery cell (20).

5. The battery system according to claim 1 or 2, wherein a second light emitting diode (38) is connected in parallel to the light emitting diode (34),
a cathode of the second light emitting diode (38) is connected to the anode of the light emitting diode (34), and
an anode of the second light emitting diode (38) is connected to a cathode of the light emitting diode (34).

6. The battery system according to any one of claims 1 to 5, wherein the battery system (201) includes a plurality of battery packs (40), and
the plurality of battery packs (40) are connected in parallel to each other thus constituting a battery block (50).

7. The battery system according to any one of claims 1 to 5, wherein the light emitting diode (34) is mounted in a casing of the battery module (30).
